# EUROPÄISCHE PATENTSCHRIFT

(11) **EP 2 574 302 B1**
(45) Veröffentlichungstag und Bekanntmachung des Hinweises auf die Patenterteilung: **13.01.2016**
(21) Anmeldenummer: 11007848.2
(22) Anmeldetag: 27.09.2011
(51) Int. Cl.: A61C 7/10, A61C 7/36

(54) **Kieferorthopädische Dehnschraube**
Orthodontic expansion screw
Vis d'extension orthodontique

(43) Veröffentlichungstag der Anmeldung: 03.04.2013
(73) Patentinhaber: Femadent GmbH & Co.KG, 60386 Frankfurt am Main (DE)
(72) Erfinder: Sander, Franz Günter, Prof. Dr. med. dent., 89081 Ulm (DE); Sander, Martin, PD Dr. F., 63755 Alzenau-Michelbach (DE)
(74) Vertreter: Metten, Karl-Heinz

(56) Entgegenhaltungen:
- EP-A1- 1 557 135
- DE-C1- 4 113 154
- DE-U1- 8 703 964
- DE-U1- 29 808 913
- FR-A1- 2 427 086
- US-A- 5 002 485

## Beschreibung

Die Erfindung betrifft eine Stelleinrichtung für eine Regulierungsvorrichtung zum Richten und/oder Regulieren mindestens eines Kiefers und/oder mindestens eines Zahns, die zwischen einem ersten Richtkörper und einem zweiten Richtkörper einer Richteinrichtung anordenbar oder angeordnet ist und die mindestens ein erstes Ankerelement, das am ersten Richtkörper festlegbar oder festgelegt ist, mindestens ein zweites Ankerelement, das am zweiten Richtkörper festlegbar oder festgelegt ist und mindestens ein am ersten Ankerelement und/oder am zweiten Ankerelement einstellbar, festlegbares oder festgelegtes erstes Distanzmittel zum Einstellen eines Abstands zwischen dem ersten Ankerelement und dem zweiten Ankerelement aufweist sowie eine Regulierungsvorrichtung zum Richten und/oder Regulieren mindestens eines Kiefers und/oder mindestens eines Zahns mit einer derartigen Stelleinrichtung.

Derartige Stelleinrichtungen und derartige Regulierungsvorrichtungen sind beispielsweise in Form von Kieferdehnschrauben bekannt. Diese umfassen Richtkörper, die sich am Kiefer und/oder einen Zahn abstützen, wobei an jedem Richtkörper ein Ankerelement, angeordnet ist. Der Abstand der Ankerelemente zueinander ist mittels eines als Schraube oder Gewindestab ausgebildeten Distanzmittels, einstellbar. Durch das Einstellen des Ankerelements üben die Richtkörper einen Druck und/oder Zug auf mindestens einen Zahn und/oder mindestens einen Kiefer aus, um den mindestens einen Zahn und/oder den mindestens einen Kiefer zu bewegen, um die Lage und/oder die Okklusion der Zähne zu verändern und um die Lage und das Wachstum der Zähne und der Kiefer zu regulieren.

Zusätzlich weisen die bekannten Stelleinrichtungen hierzu an den Ankerelementen festgelegte Hebelmittel auf, die sich von den Ankerelementen schräg wegerstrecken und die beim Schließen des Mundes auf einer schiefen Ebene in einer gegenüberliegenden Stelleinrichtung treffen und hierdurch einen nach vorne, bzw. nach hinten gerichteten Zug, bzw. Druck auf den Kiefer und die Zähne ausüben, wodurch die skelettale Lage des Kiefers und die Position der Zähne im Kiefer und deren Lage zueinander einstellbar ist.

Eine gattungsgemäße Stelleinrichtung, bzw. eine derartige Regulierungsvorrichtung ist bekannt aus DE 34 11 852 C2, bei der an jedem Ankerelement ein dornförmiges Hebelmittel angeordnet ist, mit denen beim Schließen eines Kiefers eine Kraft durch die Regulierungsvorrichtung auf den Kiefer übertragbar ist.

In der DE 41 13 154 C1 wird ein kieferorthopädischer Apparat mit einem ersten Distanzmittel für einen ersten und einen zweiten Richtkörper beschrieben. Diese sind zusammen mit einem Hebelmittel an einem Grundkörper angeordnet. Die Aufgabe der DE 41 13 154 C1 ist es, das auch bei der Lateralverstellung eines Trägers mit Magneten letztere die volle Anziehungskraft aufbringen.

Durch die Anordnung der Hebelmittel an den Ankerelementen müssen diese Druck-, Biege- und Torsionskräfte aufnehmen und aushalten, wodurch deren Lebensdauer begrenzt ist und diese leicht brechen. Dieses kann zu einem Zerstören der Stelleinrichtung führen und hierdurch Verletzungen im Mund, insbesondere durch Verschlucken von Kleinteilen, führen.

Um den Kiefer des Patienten nicht zu verletzen, muss beim Einstellen des Distanzmittels eine hohe Präzision und eine hohe Fingerfertigkeit aufgewendet werden, was sich als umständlich und zeitintensiv herausstellt.

Zudem kann durch den hohen Freilauf zwischen den Ankerelementen und aufgrund vorherrschender Fertigungstoleranz nie ganz vermieden werden, dass das Distanzmittel und eines der Ankermittel verkeilen.

Aufgabe der Erfindung ist daher, eine Stelleinrichtung sowie eine Regulierungsvorrichtung vorzuschlagen, die einfach baut, einfach handhabbar ist und bei der die Lebensdauer erhöht ist.

Die Aufgabe wird erfindungsgemäß durch eine Stelleinrichtung gemäß den Merkmalen des Patentanspruchs 1 gelöst.

Dadurch, dass zwischen dem ersten Ankerelement und dem zweiten Ankerelement ein Grundkörper mit einer Distanzmittelführung vorgesehen ist, ist die Stabilität der Stelleinrichtung erhöht.

Darüber hinaus wird hierdurch die Wahrscheinlichkeit eines Verkeilens des Distanzmittels beim Einstellen des Abstands zwischen dem ersten Ankerelement und dem zweiten Ankerelement reduziert.

Die Stelleinrichtung kann sowohl für einen Oberkiefer als auch für einen Unterkiefer Verwendung finden.

Um die Stabilität der Stelleinrichtung weiter zu erhöhen und um die Wahrscheinlichkeit eines Verkeilens des Distanzmittels in dem ersten Ankerelement oder in dem zweiten Ankerelement weiter zu reduzieren, ist es erfindungsgemäß vorgesehen, dass die Stelleinrichtung zusätzlich mindestens ein erstes Führungsmittel umfasst, das sich vom ersten Ankerelement zum zweiten Ankerelement erstreckt und eine Bewegung der Ankerelemente beim Einstellen des Abstands zueinander des Distanzmittel führt und dass der Grundkörper mindestens eine erste Führungsmittelführung für das mindestens eine Führungsmittel aufweist.

Das erste Führungsmittel kann dabei grundsätzlich beliebig ausgebildet sein, insbesondere eine beliebige Form umfassen. Es wird allerdings bevorzugt, wenn das erste Führungsmittel eine zylindrische Oberfläche umfasst.

Grundsätzlich können auch die erste Führungsmittelführung und die erste Distanzmittelführung beliebig ausgebildet sein. Hierbei erweist es sich jedoch als zweckmäßig, wenn die erste Distanzmittelführung und/oder die erste Führungsmittelführung korrespondierend zur Form des Führungsmittel bzw. des Distanzmittels ausgebildet ist.

Bevorzugt umfasst die mindestens eine erste Distanzmittelführung und/oder die mindestens eine erste Führungsmittelführung mindestens eine Bohrung im Grundkörper, die insbesondere in der Transversalebene verläuft.

Das erste Führungsmittel kann beispielsweise an einer Oberfläche des ersten Ankerelements, bzw. des zweiten Ankerelements festgelegt werden. Um die Stelleinrichtung jedoch kompakt auszubilden, erweist es sich als vorteilhaft, wenn das mindestens eine erste Führungsmittel zumindest abschnittsweise in einer Öffnung, insbesondere Bohrung, des ersten Ankerelements und/oder des zweiten Ankerelements anordenbar oder angeordnet ist.

Sowohl das Führungsmittel als auch das Distanzmittel können in der Öffnung enden oder durch die Öffnung hindurchragen.

Bei einer vorteilhaften Ausführungsform der Erfindung erweist es sich als vorteilhaft, wenn mindestens zwei, insbesondere parallel zueinander verlaufende erste Führungsmittel vorgesehen sind und wenn zwischen den beiden ersten Führungsmitteln das erste Distanzmittel angeordnet ist. Hierdurch ist die Stabilität der Stelleinrichtung, insbesondere beim Einstellen des Abstands der.beiden Ankerelemente zueinander, weiter erhöht.

Das Distanzmittel kann grundsätzlich beliebig gebildet sein, beispielsweise teleskopartig. Darüber hinaus kann es grundsätzlich den Druck auf die Richtkörper mechanisch, hydraulisch und/oder elektrisch ausüben. Allerdings erweist es sich als kostengünstig, wenn das erste Distanzmittel einen Rundkörper, insbesondere Bolzen oder Dehnschraube, umfasst, der zumindest an einem seiner Enden ein Außengewinde aufweist, mit dem das erste Distanzmittel in einer, insbesondere ein Innengewinde aufweisenden, Öffnung, insbesondere Gewindebohrung, des ersten Ankerelements und/oder des zweiten Ankerelements zumindest teilweise anordenbar oder angeordnet ist.

Hierdurch ist gewährleistet, dass die relative Lage des Distanzmittels zum Grundkörper im Wesentlichen unverändert bleibt und durch Drehen des Distanzmittels der Abstand des ersten Ankerelements zum zweiten Ankerelement sowie der Abstand des ersten Ankerelements zum Grundkörper und des zweiten Ankerelements zum Grundkörper durch Verdrehen des Distanzmittels erhöht oder reduziert wird.

Darüber hinaus erweist es sich als vorteilhaft, wenn das erste Distanzmittel mindestens einen Betätigungsabschnitt, insbesondere zum drehenden Betätigen des ersten Distanzmittels aufweist und/oder wenn der Grundkörper zumindest eine erste Ausnehmung aufweist, durch die der Betätigungsabschnitt des ersten Distanzmittels von Außen betätigbar zugänglich ist.

Dadurch, dass der Betätigungsabschnitt über eine erste Ausnehmung im Grundkörper zugänglich ist, ist der Betätigungsabschnitt im Wesentlichen im Grundkörper und von diesem im Wesentlichen umschlossen angeordnet. Hierdurch bildet der Grundkörper gleichzeitig einen Schutz für den Kiefer bzw. den Zahn, beispielsweise, wenn der Betätigungsabschnitt durch einen die Stelleinrichtung einstellenden Benutzer verfehlt wird. Hierdurch wird die Gefahr reduziert, dass ein Kiefer oder ein Zahn des die Stelleinrichtung tragenden Benutzers verletzt wird, reduziert.

In Weiterbildung letztgenannten Erfindungsgedankens erweist es sich als vorteilhaft, wenn der Betätigungsabschnitt des ersten Distanzmittels durch mindestens ein erstes Ringelement, an dem der Rundkörper des ersten Distanzmittels, insbesondere drehfest, festlegbar oder festgelegt ist, oder durch ein radial vorspringenden Abschnitt des Rundkörpers gebildet ist und/oder wenn das erste Ringelement und/oder der radial vorspringende Abschnitt des Rundkörpers eine Mehrzahl an radial erstreckten Öffnungen, insbesondere Bohrungen, aufweist, die über die mindestens eine erste Ausnehmung des Grundkörpers von Außen zugänglich sind.

Wenn der Betätigungsabschnitt durch ein erstes Ringelement gebildet ist, kann dieser lös-bar oder unlösbar an dem Rundkörper angeordnet werden.

Wenn das erste Ringelement oder der radial vorspringende Abschnitt des Rundkörpers eine Mehrzahl an radial erstreckten Öffnungen aufweist, ist das erste Führungsmittel in einfacher Weise betätigbar. Solchenfalls kann ein Benutzer mit einem stiftförmigen Stellelement in die radial erstreckten Öffnungen eindringen und durch eine Kraft in Umfangsrichtung des Ringelements oder des vorspringenden Abschnitts eine Drehbewegung des Distanzmittels bewirken, wodurch sich der Abstand des ersten Ankerelements zum zweiten Ankerelement reduziert oder erhöht.

Darüber hinaus ist bei der erfindungsgemäßen Stelleinrichtung vorgesehen, dass der Grundkörper einen ersten Abschnitt aufweist, an dem das erste Distanzmittel angeordnet ist und einen zweiten Abschnitt aufweist, an dem mindestens ein dornförmiges Hebelmittel angeordnet ist.

Grundsätzlich kann das insbesondere dornförmige Hebelmittel lösbar oder unlösbar mit dem zweiten Abschnitt des Grundkörpers verbunden sein.

Erfindungsgemäß ist es vorgesehen, das der Grundkörper und zumindest eines des mindestens einen Hebelmittels ein gemeinsames, in einem Stück gefertigtem Bauteil umfassen und/oder wenn der Grundkörper und zumindest eines des mindestens einen Hebelmittels jeweils voneinander separierbare oder separate Bauteile umfassen und lösbar oder unlösbar am zweiten Abschnitt des Grundkörpers, miteinander verbunden sind.

Hierbei ist es beispielsweise denkbar, dass der Grundkörper gemeinsam mit dem mindestens einen Hebelmittel in einem Stück gefertigt ist. Solchenfalls können Grundkörper und Hebelmittel beispielsweise ein Gussteil umfassen.

Ferner ist es denkbar, dass mindestens zwei Hebelmittel vorgesehen sind, die sich parallel zueinander und an den Seiten des Grundkörpers angeordnet erstrecken.

Wenn der Grundkörper und das mindestens eine Hebelmittel aus einem Stück gefertigt sind, müssen lediglich die Führungsmittel, Distanzmittel und Ankerelemente mit dem Grundkörper verbunden werden. Hierdurch lässt sich die Hebeleinrichtung besonderes bauteilarm ausbilden.

Darüber hinaus ist es denkbar, dass der Grundkörper und das mindestens eine Hebelmittel separat herstellbar, bzw. hergestellt sind. Solchenfalls erweist es sich als vorteilhaft, wenn das mindestens eine Hebelmittel an dem Grundkörper unlösbar festgelegt wird, beispielsweise durch Schweißen, Kleben und/oder Anformen oder lösbar mit dem Grundkörper verbunden wird, beispielsweise durch Stecken, Fügen, Schrauben.

Bei einer Weiterbildung ist vorgesehen, dass mindestens zwei Hebelmittel am Grundkörper vorgesehen sind, die im Wesentlichen parallel zueinander verlaufend an diesem angeordnet sind. Diese können seitlich am oder auf dem Grundkörper angeordnet sein und beispielsweise mittels eines Stegs, der den zweiten Abschnitt bildet, miteinander verbunden sein.

Ferner ist es denkbar, dass mindestens zwei Hebelmittel durch den Steg als ein gemeinsames Teil gebildet sind, wobei die Verbindung aus Steg und zwei Hebelmittel mit dem ersten Abschnitt des Grundkörpers verbindbar ist.

Das mindestens eine Hebelmittel kann grundsätzlich einen beliebigen Querschnitt umfassen und beispielsweise rund, quadratisch, rechteckig und/oder dreieckig sein.

Darüber hinaus können sowohl Grundkörper als auch Hebelmittel in einem Stück gegossen sein oder aus einem Vollmaterial herausgearbeitet, beispielsweise gefräst, sein.

Darüber hinaus ist es erfindungsgemäß vorgesehen, dass das mindestens eine Hebelmittel einen ersten Bereich, mit dem es am zweiten Abschnitt des Grundkörpers angeordnet ist, einen zweiten Bereich, der die größte Erstreckung des Hebelmittels umfasst und mindestens eine Führungsfläche aufweist, mit der das Hebelmittel an einer korrespondierenden Oberfläche eines, insbesondere am Unterkiefer festgelegten, Stegelements gleitend bewegbar ist und mit einem dritten Bereich, der sich bezüglich des zweiten Bereichs schräg oder quer erstreckt.

Dadurch, dass das Hebelmittel an einer korrespondierenden Oberfläche des Stegelements gleitend bewegbar ist, kann die Stelleinrichtung beim Öffnen und Schließen des Mundes eine Kraft auf den Kiefer, bzw. den Zahn übertragen.

Erfindungsgemäß ist es vorgesehen, dass sich der zweite Bereich des Hebelmittels bezüglich des ersten Abschnitts und/oder des zweiten Abschnitts des Grundkörpers quer oder schräg erstreckt, insbesondere mit diesem einen Winkel von 180° bis 0°, bevorzugt 135° bis 45°, bevorzugt 120° bis 70°, bevorzugt 110° bis 80° einschließt.

Über den Winkel zwischen dem zweiten Bereich des mindestens einen Hebelmittels und dem ersten Abschnitt, bzw. dem zweiten Abschnitt, lässt sich die Kraft, die durch die Stelleinrichtung auf den Kiefer beim Öffnen und Schließen des Mundes übertragen wird, einstellen.

Bei der erfindungsgemäßen Stelleinrichtungist vorgesehen, dass diese mindestens ein drittes Ankerelement aufweist, das an einem dritten Richtkörper, der bezüglich des ersten Richtkörper und des zweiten Richtkörpers relativ bewegbar ist, festgelegt ist und mittels eines zweiten Distanzmittels bezüglich seines Abstands zum Grundkörper einstellbar ist und der Grundkörper mindestens eine zweite Distanzmittelführung für das zweite Distanzmittel aufweist.

Dadurch, dass ein drittes Ankerelement und ein dritter Richtkörper vorgesehen ist, ist die Einstellbarkeit der Stelleinrichtung erweitert. Hierbei ist es beispielsweise denkbar, das der erste Richtkörper und der zweite Richtköper sich lediglich gegenüber einem Kiefer abstützen und der dritte Richtkörper sich lediglich an einem Zahn abstützt.

Um die Stabilität der Stelleinrichtung beim Einstellen des Abstands des dritten Ankerelements zum Grundkörpers zu erhöhen, erweist es sich als vorteilhaft, wenn die Stelleinrichtung zusätzlich mindestens ein zweites Führungsmittel umfasst, dass sich vom dritten Ankerelement zum Grundkörper erstreckt und eine Bewegung des dritten Ankerelements beim Einstellen des Abstands zum Grundkörper durch das zweite Distanzmittel führt und/oder wenn der Grundkörper mindestens eine zweite Führungsmittelführung für das mindestens eine zweite Führungsmittel aufweist.

Hierbei sind die Vorteile der ersten Distanzmittelführung und der zweiten Distanzmittelführung im Wesentlichen die gleichen wie die der zweiten Distanzmittelführung, bzw. der zweiten Führungsmittelführung.

Die zweite Distanzmittelführung oder die mindestens eine zweite Führungsmittelführung können grundsätzlich beliebig ausgebildet sein. Allerdings erweist es sich als zwecksmäßig, wenn die zweite Distanzmittelführung und/oder die zweite Führungsmittelführung. korrespondierend zum zweiten Distanzmittel und/oder zum zweiten Führungsmittel ausgebildet ist. Bevorzugt wird es, wenn die mindestens eine zweite Distanzmittelführung und/oder die mindestens eine zweite Führungsmittelführung mindestens jeweils eine Bohrung im Grundkörper umfasst, die insbesondere in der Sagittalebene verläuft.

Ferner erweist es sich als vorteilhaft, wenn das mindestens eine zweite Führungsmittel zumindest abschnittsweise in einer Öffnung, insbesondere Bohrung, des dritten Ankerelements und/oder des Grundkörpers angeordnet ist.

Hierbei erweist es sich insbesondere als zweckmäßig, wenn mindestens zwei, insbesondere parallel zueinander verlaufende, zweite Führungsmittel vorgesehen sind und wenn zwischen den beiden zweiten Führungsmitteln das zweite Distanzmittel angeordnet ist.

Das zweite Distanzmittel kann ähnlich dem ersten Distanzmittel beliebig ausgebildet sein. Es erweist sich jedoch als vorteilhaft, wenn das zweite Distanzmittel ein Rundkörper, insbesondere Bolzen oder Dehnschraube, umfasst, der zumindest mindestens an einem seiner Enden ein Außengewinde aufweist, mit dem er in der, insbesondere ein Innengewinde aufweisenden, Öffnung, insbesondere Gewindebohrung des dritten Ankerelements und/oder des Grundkörpers angeordnet ist.

Bei einer Weiterbildung ist vorgesehen, dass das zweite Distanzmittel einen Betätigungsabschnitt, insbesondere zum drehenden Betätigen des zweiten Distanzmittels, aufweist und/oder dass der Grundkörper eine zweite Ausnehmung aufweist, mittels der der Betätigungsabschnitt des zweiten Distanzmittels von Außen betätigbar zugänglich ist.

Hierdurch ist der Betätigungsabschnitt des zweiten Distanzmittels im Wesentlichen durch den Grundkörper umgeben und bildet einen Schutz für den Kiefer. Dadurch ist die Gefahr reduziert, dass beim Einstellen des Distanzmittels der Kiefer unbeabsichtigt verletzt wird.

Darüber hinaus bildet die zweite Ausnehmung, ähnlich wie die erste Ausnehmung, eine Führung zum Betätigungsabschnitt, wodurch die Einstellbarkeit des Abstands des ersten Ankerelements zum Grundkörper vereinfacht ist.

Der Betätigungsabschnitt des zweiten Distanzmittels kann grundsätzlich beliebig ausgebildet sein. Es erweist sich jedoch als vorteilhaft, wenn der Betätigungsabschnitt des zweiten Distanzmittels durch mindestens ein zweites Ringelement, an dem der Rundkörper des zweiten Distanzmittels, insbesondere drehfest festlegbar oder festgelegt ist oder durch ein radial vorspringenden Abschnitt des Rundkörpers gebildet ist und/oder wenn das zweite Ringelement und/oder der radial vorspringende Abschnitt des Rundkörpers eine Mehrzahl an radial erstreckten Öffnungen, insbesondere Bohrungen aufweist, die über die mindestens eine zweite Ausnehmung des Rundkörpers von Außen betätigbar zugänglich sind.

Grundsätzlich ist es denkbar, dass die radial erstreckten Öffnungen des zweiten Ringelements oder des radial vorspringenden Abschnitts des Rundkörpers des zweiten Distanzmittels mit den Öffnungen des ersten Ringelements und/oder des radial vorspringenden Abschnitts des Rundkörpers des ersten Distanzmittels einen gleichen Radius oder einen voneinander abweichenden Radius umfassen.

Durch die radial erstreckten Öffnungen in dem vorspringenden Abschnitt des Rundkörpers des zweiten Distanzmittels, bzw. des zweiten Ringelements kann das zweite Distanzmittel auf einfache Weise verdreht werden. Hierdurch kann ein Benutzer mit einem Stellelement in die Öffnungen eingreifen und das zweite Distanzmittel durch eine Bewegung in Umfangsrichtung des zweiten Distanzmittel eine Drehung des zweiten Distanzmittels in Umfangsrichtung bewirken. Bei einer Weiterbildung der erfindungsgemäßen Stelleinrichtung ist vorgesehen, dass das erste Distanzmittel und das zweite Distanzmittel quer oder schräg zueinander angeordnet sind.

Unter quer wird ein Winkel von im Wesentlichen 90° verstanden.

Das zweite Führungsmittel kann grundsätzlich an einer beliebigen Stelle des Grundkörpers angeordnet sein und beispielsweise am ersten Abschnitt des Grundkörpers ausgebildet sein.

Es erweist sich jedoch als vorteilhaft, wenn das zweite Führungsmittel am zweiten Abschnitt des Grundkörpers anordenbar oder angeordnet ist. Darüber hinaus ist es bei einer vorteilhaften Weiterbildung der erfindungsgemäßen Stelleinrichtung vorgesehen, dass die Stelleinrichtung mindestens eine Anzeigeeinrichtung umfasst, die mindestens eine Betätigungsrichtung des Betätigungsabschnitts des ersten Distanzmittels und/oder des Betätigungsabschnitts des zweiten Distanzmittels anzeigt.

Hierdurch ist dem Benutzer, der den Abstand des ersten Ankerelements zum zweiten Ankerelement, bzw. des dritten Ankerelements zum Grundkörper einstellen möchte auf einfache Weise vermittelbar, in welche Richtung er das erste Distanzmittel oder das zweite Distanzmittel verdrehen muss, um ein sich Annähern oder Entfernen des ersten Ankerelements und des zweiten Ankerelements oder ein sich Annähern oder Entfernen des dritten Ankerelements zum Grundkörper zu erzielen.

Die Anzeigeeinrichtung kann beliebig gebildet sein. Es erweist sich als zweckmäßig, wenn sie ein Kunststoffteil umfasst, das beispielsweise auf das erste Ankerelement, das zweite Ankerelement und/oder auf das dritte Ankerelement aufschiebbar ist. Solchenfalls kann es dort lösbar oder unlösbar festgelegt sein.

Solchenfalls erweist es sich als vorteilhaft, wenn jedem Ankerelement eine Anzeigeeinrichtung zugeordnet ist, die jeweils lösbar oder unlösbar, insbesondere angeklebt, angeclipst oder formschlüssig am Ankerelement angeordnet ist.

Darüber hinaus wird die Aufgabe durch eine Regulierungsvorrichtung zum Richten und/oder Regulieren mindestens eines Kiefers und/oder mindestens eines Zahns gelöst, mit mindestens einer Richteinrichtung, die mindestens einen, insbesondere plattenförmigen, ersten Richtkörper und mindestens einen, insbesondere plattenförmigen, zweiten Richtkörper aufweist, welche, zumindest in einer Transversalebene (horizontale Ebene) und/oder in einer Sagittalebene (vertikale Ebene durch Körpermitte) relativ zueinander bewegbar sind und die sich mit mindestens einem Richtkörper an mindestens einem Kiefer und/oder an mindestens einem Zahn abstützt, und mit einer Stellreinrichtung gemäß den Merkmalen des Patentanspruchs 1.

Die erfindungsgemäße Stelleinrichtung, das erfindungsgemäße Distanzmittel, der erfindungsgemäße Grundkörper und die erfindungsgemäße Regulierungsvorrichtung erweisen sich in mehrfacher Hinsicht als vorteilhaft:

Dadurch, dass ein Grundkörper vorgesehen ist, ist das Distanzmittel in seiner Bewegung geführt und hierdurch die Stabilität der Stelleinrichtung erhöht. Darüber hinaus ist die Gefahr reduziert, dass das Distanzmittel beim Verstellen mit einem der Ankerelemente verkeilt.

Dadurch, dass in dem Grundkörper jedem Distanzmittel eine Ausnehmung zugeordnet ist, über die ein jeweiliger Betätigungsabschnitt zugänglich ist, ist hierdurch eine Führung zum Erreichen der Betätigungseinrichtung gebildet, wodurch das Einstellen des Abstands zwischen den Ankerelementen bezüglich des Grundkörpers vereinfacht ist.

Darüber hinaus bildet der Grundkörper solchenfalls einen Schutz für den Kiefer und/oder den Zahn des Trägers der Stelleinrichtung beim Verstellen des ersten Distanzmittels und/oder des zweiten Distanzmittels.

Ferner werden durch den Grundkörper Kräfte, die auf die Stelleinrichtung wirken, gleichmäßig auf die Führungsmittel und/oder Distanzmittel übertragen, wodurch die Stabilität der Anordnung gegen ein Verkippen oder Verdrehen erhöht ist.

Dadurch, dass die Hebelmittel an dem Grundkörper angeordnet sind, verschieben sich diese nicht, wenn der Abstand zwischen den Ankerelementen erhöht oder reduziert wird. Hierdurch sind Torsionskräfte, die zu einem Brechen der Hebelmittel führen könnten, vermieden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der erfindungsgemäßen Stelleinrichtung.

In der Zeichnung zeigt:
- Figur 1: eine perspektivische Darstellung der erfindungsgemäßen Stelleinrichtung;
- Figur 2: eine Seitenansicht auf die erfindungsgemäße Stelleinrichtung gemäß Figur 1;
- Figur 3: eine Vorderansicht der erfindungsgemäßen Stelleinrichtung gemäß Figur 1;
- Figur 4: eine Draufsicht auf eine erfindungsgemäße Regulierungsvorrichtung.

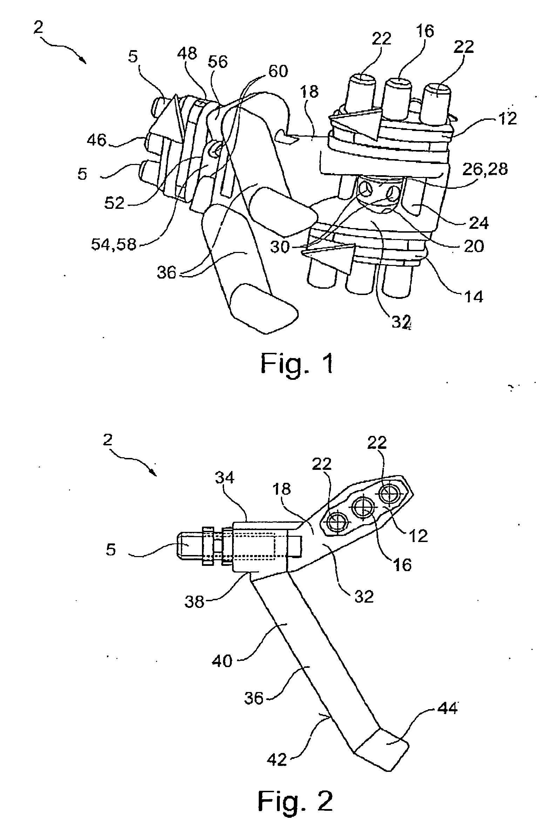

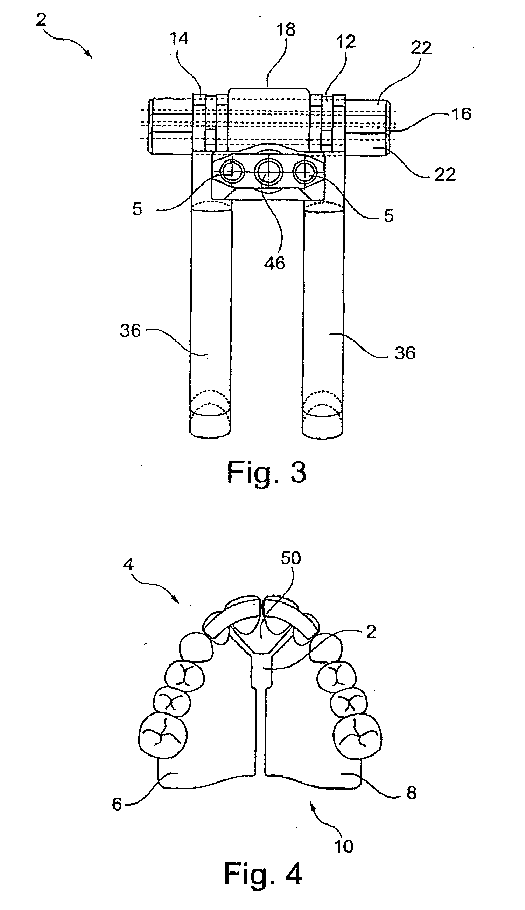

Die Figuren 1-3 zeigen ein Ausführungsbeispiel der insgesamt mit dem Bezugszeichen 2 versehenen Stelleinrichtung für eine Regulierungsvorrichtung 4 (siehe Figur 4), zum Richten und/oder Regulieren mindestens eines Kiefers und/oder mindestens eines Zahns. Die Stelleinrichtung 2 ist zwischen einem ersten Richtkörper 6 und einem zweiten Richtkörper 8 einer Richteinrichtung 10 anordenbar oder angeordnet (in den Figuren 1-3 nicht dargestellt).

Hierzu ist im ersten Richtkörper 6 ein erstes Ankerelement 12 und im zweiten Richtkörper 8 ein zweites Ankerelement 14 festgelegt. Zwischen dem ersten Ankerelement 12 und dem zweiten Ankerelement 14 ist ein erstes Distanzmittel 16 vorgesehen, mit dem der Abstand zwischen dem ersten Ankerelement 12 und dem zweiten Ankerelement 14 einstellbar ist. Hierbei ist das erste Distanzmittel 16 durch einen Grundkörper 18 der Stelleinrichtung 2 mittels einer Distanzmittelführung 20 gehalten.

Zusätzlich zu dem ersten Distanzmittel 16 und parallel hierzu verlaufend, umfasst das in den Figuren 1-3 dargestellte Ausführungsbeispiel zwei erste Führungsmittel 22, die parallel zum ersten Distanzmittel 16 angeordnet verlaufen und in einer ersten Führungsmittelführung 24 im Grundkörper 18 gehalten sind.

Sowohl das erste Distanzmittel 18 als auch die beiden ersten Führungsmittel 22, umfassen jeweils einen Rundkörper. Das erste Distanzmittel 16 umfasst an seinen Enden jeweils ein Außengewinde, mit dem es in Innengewinde umfassende Öffnungen im ersten Ankerelement 12 und/oder im zweiten Ankerelement 14 eingreift, wodurch ein Verdrehen des ersten Distanzmittels 16 eine Bewegung des ersten Ankerelements 12 und des zweiten Ankerelements 14 aufeinander zu oder voneinander weg bewirkt.

Bei dem in den Figuren 1-3 dargestelltem Ausführungsbeispiel durchgreifen das erste Distanzmittel 16 sowie die beiden ersten Führungsmittel 22 sowohl das erste Ankerelement 12 als auch das zweite Ankerelement 14 und ragen über dieses hinaus nach außen.

Um den Abstand zwischen dem ersten Ankerelement 12 und dem zweiten Ankerelement 14 einstellen zu können, umfasst das erste Distanzmittel 16 einen Betätigungsabschnitt 26, mit dem das erste Distanzmittel 16 drehend betätigbar ist. Hierzu umfasst der Betätigungsabschnitt 26 des ersten Distanzmittels 16 ein Ringelement 28, das radial erstreckte Öffnungen 30 umfasst.

In die radial erstreckten Öffnungen 30 kann ein Stellmittel eingeführt werden und durch eine Bewegung in Umfangsrichtung eine Kraft auf das erste Distanzmittel 16 ausgeübt werden, so dass sich dieses in Umfangsrichtung dreht. Hierdurch bewegen sich das erste Ankerelement 12 und das zweite Ankerelement 14 aufeinander zu oder voneinander weg.

Um den Betätigungsabschnitt 26 des ersten Distanzmittels von Außen zugänglich zu machen, ist im Grundkörper 18 eine erste Ausnehmung 30 vorgesehen.

Die Ausnehmung 30 dient gleichzeitig als Führung.

Die erste Ausnehmung 30 sowie das erste Distanzmittel 16 und die ersten Führungsmittel 22 sind an einem ersten Abschnitt 32 des Grundkörpers 18 angeordnet. Darüber hinaus weist der Grundkörper 18 einen zweiten Abschnitt 34 auf, an dem mindestens ein, insbesondere dornförmiges, Hebelmittel 36 angeordnet ist.

Bei den in den Figuren gezeigten Ausführungsbeispielen sind an dem zweiten Abschnitt 34 des Grundkörpers 18 zwei Hebelmittel 36 vorgesehen. Diese befinden sich seitlich des zweiten Abschnitts 34 des Grundkörpers 18. Hierbei umfasst jedes Hebelmittel einen ersten Bereich 38, mit dem es am zweiten Abschnitt 34 des Grundkörpers 18 angeordnet ist, einen zweiten Bereich 40, der die größte Erstreckung des Hebelmittels 36 umfasst und eine Führungsfläche 42 aufweist sowie einen dritten Bereich 44, der sich bezüglich des zweiten Bereichs 40 schräg erstreckt.

Die Führungsfläche 42 des zweiten Bereichs 40 des Hebelmittels 36 ist derart ausgebildet, dass sie mit einer korrespondierenden Oberfläche eines beispielsweise am Unterkiefer festgelegten Stegelements entlang gleitend bewegbar ist, wodurch eine Kraft auf die Stelleinrichtung übertragbar ist.

Hierdurch wird eine Kraft auf das Hebelmittel 36 übertragen, wenn der Mund geöffnet oder geschlossen wird.

Darüber hinaus ist bei dem in den Figuren 1-3 dargestelltem Ausführungsbeispiel ein zweites Distanzmittel 46 vorgesehen, mit dem ein drittes Ankerelement 48, das an einem dritten Richtkörper 50 festgelegt ist, bezüglich seines Abstands zum Grundkörper 18 einstellbar ist.

Bei dem in den Figuren 1-3 dargestelltem Ausführungsbeispiel ist das zweite Distanzmittel 46 am zweiten Abschnitt 34 des Grundkörpers 18 angeordnet. Um eine Bewegung des zweiten Distanzmittel 46 zu stabilisieren, sind darüber hinaus zwei zweite Führungsmittel 50 vorgesehen, die im Wesentlichen parallel zum zweiten Distanzmittel 46 verlaufen. Das zweite Distanzmittel 46 ist in einer zweiten Distanzmittelführung 52 im Grundkörper 18 gehalten und über eine zweite Ausnehmung und ein Betätigungsabschnitt 54 des zweiten Distanzmittels 46 über eine Ausnehmung 56 im zweiten Abschnitt 34 des Grundkörpers 18 nach Außen zugänglich.

Der zweite Betätigungsabschnitt des zweiten Distanzmittels 46 ist durch ein zweites Ringelement 58 gebildet, das radial erstreckte Öffnungen 60 umfasst, mit denen das zweite Distanzmittel 16 in Umfangsrichtung drehbar ist.

Bei den in den Figuren gezeigten Ausführungsbeispielen sind das erste Distanzmittel 16 und das zweite Distanzmittel 46 quer zueinander angeordnet.

Figur 4 zeigt eine Draufsicht auf eine erfindungsgemäße Regulierungsvorrichtung 4, die eine Stelleinrichtung 2 sowie einen ersten Richtkörper 6, einen zweiten Richtkörper 8 und einen dritten Richtkörper 50 umfasst.

Die in der vorstehenden Beschreibung, in den Ansprüchen sowie in der Zeichnung offenbarten Merkmalen der Erfindung, können sowohl einzeln, als auch in jeder beliebigen Kombination in der Verwirklichung der Erfindung in ihren verschiedenen Ausführungsformen wesentlich sein.

## Patentansprüche

1. Stelleinrichtung (2) für eine Regulierungsvorrichtung (4) zum Richten und/oder Regulieren mindestens eines Kiefers und/oder mindestens eines Zahns, die zwischen einem ersten Richtkörper (6) und einem zweiten Richtkörper (8) einer Richteinrichtung (10) anordenbar oder angeordnet ist und die mindestens ein erstes Ankerelement (12), das am ersten Richtkörper (6) festlegbar oder festgelegt ist, mindestens ein zweites Ankerelement (14), das am zweiten Richtkörper (8) festlegbar oder festgelegt ist und mindestens ein am ersten Ankerelements (12) und/oder am zweiten Ankerelement (14) einstellbar, festlegbares oder festgelegtes erstes Distanzmittel (16) zum Einstellen eines Abstands zwischen dem ersten Ankerelement (12) und dem zweiten Ankerelement (14) aufweist, wobei die Stelleinrichtung (2) mindestens einen im Wesentlichen mittig zwischen dem ersten Ankerelement (12) und dem zweiten Ankerelement (14) angeordneten Grundkörper (18) umfasst, der zumindest eine erste Distanzmittelführung (20) für das erste Distanzmittel (16) aufweist, **dadurch gekennzeichnet, dass** der Grundkörper (18) einen ersten Abschnitt (32) aufweist, an dem das erste Distanzmittel (16) angeordnet ist und einen zweiten Abschnitt (34) aufweist, an dem mindestens ein dornförmiges Hebelmittel (36) angeordnet ist, und wobei der Grundkörper (18) und zumindest eines der mindestens einen Hebelmittel (36) ein gemeinsames, in einem Stück gefertigtes Bauteil umfassen und/oder dass der Grundkörper (18) und zumindest eines der mindestens einen Hebelmittel (36) jeweils voneinander separierbare oder separate Bauteile umfassen und lösbar oder unlösbar am zweiten Abschnitt (34) des Grundkörpers (18) miteinander verbunden sind, und wobei
die Stelleinrichtung (2) zusätzlich mindestens ein erstes Führungsmittel (22) umfasst, das sich vom ersten Ankerelement (12) zum zweiten Ankerelement (14) erstreckt und eine Bewegung der Ankerelemente (12, 14) beim Einstellen des Abstands zueinander durch das erste Distanzmittel (16) führt und dass der Grundkörper (18) mindestens eine erste Führungsmittelführung (24) für das mindestens eine Fübrungsmittel (22) aufweist, und wobei
das mindestens eine Hebelmittel (36) einen ersten Bereich (38), mit dem es am zweiten Abschnitt (34) des Grundkörpers (18) angeordnet ist, einen zweiten Bereich (40), der die größte Erstreckung des Hebelmittels (36) umfasst und mindestens eine Führungsfläche (42) aufweist, mit der das Hebelmittel (36) an einer korrespondierenden Oberfläche eines Stegelements gleitend bewegbar ist, und mit einem dritten Bereich (44), der sich bezüglich des zweiten Bereichs schräg oder quer erstreckt, und wobei sich der zweite Bereich (40) des Hebelmittels (36) bezüglich des ersten Abschnitts (32) und/oder des zweiten Abschnitts (34) des Grundkörpers (18) quer oder schräg erstreckt, und wobei
die Stelleinrichtung (2) mindestens ein drittes Ankerelement (48) ausweist, das an einem dritten Richtkörper (50), der bezüglich des ersten Richtkörpers (6) und des zweiten Richtkörpers (8) relativ bewegbar ist, festgelegt ist und mittels eines zweiten Distanzmittels (46) bezüglich seines Abstands zum Grundkörper (18) einstellbar ist und der Grundköper mindestens eine zweite Distanzmittelführung (52) für das zweite Distanzmittel (46) aufweist.

2. Stelleinrichtung (2) nach Anspruch 1, **dadurch gekennzeichnet, dass** das mindestens eine erste Führungsmitteln (22) zumindest abschnittsweise (32) in einer Öffnung, insbesondere Bohrung, des ersten Ankerelements (12) und/oder des zweiten Ankerelements (14) anordenbar oder angeordnet ist.

3. Stelleinrichtung (2) nach Anspruch 1 oder 2, **dadurch gekennzeichnet, dass** mindestens zwei parallel zueinander verlaufende erste Führungsmittel (22) vorgesehen sind und dass zwischen den beiden ersten Führungsmitteln (22) das erste Distanzmittel (16) angeordnet ist.

4. Stelleinrichtung (2) nach einem oder mehreren der vorhergehenden Ansprüche, **dadurch gekennzeichnet, dass** das erste Distanzmittel (16) einen Rundkörper, insbesondere Bolzen oder Dehnschraube, umfasst, der zumindest an einem seiner Enden ein Außengewinde aufweist, mit dem das erste Distanzmittel (16) in einer, insbesondere ein Innengewinde aufweisenden, Öffnung, insbesondere Gewindebohrung, des ersten Ankerelements (12) und/oder des zweiten Ankerelements (14) zumindest teilweise anordenbar oder angeordnet ist.

5. Stelleinrichtung (2) nach einem oder mehreren der vorhergehenden Ansprüche, **dadurch gekennzeichnet, dass** das erste Distanzmittel (16) mindestens einen Betätigungsabschnitt (26) zum drehenden Betätigen des ersten Distanzmittels (16) aufweist und dass der Grundkörper (18) zumindest eine erste Ausnehmung (30) aufweist, durch die der Betätigungsabschnitt (26) des ersten Distanzmittels (16) von Außen betätigbar zugänglich ist.

6. Stelleinrichtung (2) nach Anspruch 5, **dadurch gekennzeichnet, dass** der Betätigungsabschnitt (26) des ersten Distanzmittels (16) durch mindestens ein erstes Ringelement (28), an dem der Rundkörper des ersten Distanzmittels (16) drehfest festlegbar oder festgelegt ist oder durch einen radial vorspringenden Abschnitt des Grundkörpers gebildet ist und/oder dass das erste Ringelement (28) und/oder der radial vorspringende Abschnitt des Rundkörpers eine Mehrzahl an radial erstrecken Öffnungenaufweist, die über die mindestens eine erste Ausnehmung (30) des Grundkörpers (18) von Außen zugänglich sind.

7. Stelleinrichtung (2) nach einem oder mehreren der vorhergehenden Ansprüche, **dadurch gekennzeichnet, dass** der Grundkörper (18) einen ersten Abschnitt (32) aufweist, an dem die Ausnehmung (30) und/oder das mindestens eine erste Führungsmittel (22) angeordnet ist.

8. Stelleinrichtung (2) nach einem oder mehreren der vorhergehenden Ansprüche, **dadurch gekennzeichnet, dass** das Hebelmittel (36) mit den zumindest einen Führungsfläche (42) des zweiten Bereiches an einer korrespondierenden Oberfläche eines am Unterkiefer festgelegten Stegelements gleitend bewegbar ist.

9. Stelleinrichtung (2) nach einem oder mehreren der vorhergehenden Ansprüche, **dadurch gekennzeichnet, dass** sich der zweite Bereich (40) des Hebelmittels (36) bezüglich des ersten Abschnitts (32) und/oder des zweiten Abschnitts (34) des Grundkörpers (18) quer oder schräg erstreckt mit diesem einen Winkel von 180° bis 0°, bevorzugt 135° bis 45°, bevorzugt 120° bis 70°, bevorzugt 110° bis 80° einschließt.

10. Stelleinrichtung (2) nach einem oder mehreren der vorhergehenden Ansprüche, **dadurch gekennzeichnet, dass** die Stelleinrichtung (2) zusätzlich mindestens ein zweites Führungsmittel (5) umfasst, das sich vom dritten Ankerelement (48) zum Grundkörper (18) erstreckt Und eine Bewegung des dritten Ankerelements (48) beim Einstellen des Abstands zum Grundkörper (18) durch das zweite Distanzmittel (46) führt und dass der Grundkörper (18) mindestens eine zweite Führungsmittelführung (52) für das mindestens eine zweite Führungsmittel (5) aufweist.

11. Stelleinrichtung (2) nach einem oder mehreren der vorhergehenden Ansprüche, **dadurch gekennzeichnet, dass** das mindestens eine zweite Führungsmittel (5) zumindest abschnittsweise in einer Öffnung, insbesondere Bohrung, des dritten Ankerelements (48) und/oder des Grundkörpers (18) angeordnet ist.

12. Stelleinrichtung (2) nach einem oder mehreren der vorhergehenden Ansprüche 10 oder 11, **dadurch gekennzeichnet, dass** mindestens zwei, insbesondere parallel zueinander verlaufende, zweite Führungsmittel (5) vorgesehen sind und dass zwischen den beiden zweiten Führungsmitteln (5) das zweite Distanzmittel (46) angeordnet ist.

13. Stelleinrichtung (2) nach einem oder mehreren der vorhergehenden Ansprüche 10 bis 12, **dadurch gekennzeichnet, dass** das zweite Distanzmittel (46) einen Rundkörper, insbesondere Bolzen oder Dehnschraube, umfasst, der zumindest mindestens an einem seiner Enden ein Außengewinde aufweist, mit dem er in der, insbesondere ein Innengewinde aufweisenden, Öffnung, insbesondere Gewindebohrung, des dritten Ankerelements (48) und/oder des Grundkörpers (18) angeordnet ist.

14. Stelleinrichtung (2) nach einem öder mehreren der vorhergehenden Ansprüche 10 bis 13, **dadurch gekennzeichnet, dass** das zweite Distanzmittel (46) einen Betätigungsabschnitt (54), insbesondere zum drehenden Betätigen des zweiten Distanzmittels (46), aufweist und dass der Grundkörper (18) eine zweite Ausnehmung (56) aufweist, mittels der der Betätigungsabschnitt (54) des zweiten Distanzmittels (46) von Außen betätigbar zugänglich ist.

15. Stelleinrichtung (2) nach einem oder mehreren der vorhergehenden Ansprüche 10 bis 14, **dadurch gekennzeichnet, dass** der Betätigungsabschnitt (54) des zweiten Distanzmittels (46) durch mindestens ein zweites Ringelement (58), an dem Rundkörper des zweiten Distanzmittels (46) drehfest festlegbar oder festgelegt ist oder durch einen radial vorspringenden Abschnitt des Rundkörpers gebildet ist und/oder dass das zweite Ringelement (58) und/oder der radial vorspringende Abschnitt des Rundkörpers eine Mehrzahl an radial erstreckten Öffnungen (60), insbesondere Bohrungen aufweist, die über die mindestens eine zweite Ausnehmung (56) des Grundkörpers (18) von Außen betätigbar zugänglich sind.

16. Stelleinrichtung (2) nach einem oder mehreren der vorhergehenden Ansprüche 10 bis 15, **dadurch gekennzeichnet, dass** das erste Distanzmittel (16) und das zweite Distanzmittel (46) quer oder schräg zueinander angeordnet sind.

17. Stelleinrichtung (2) nach einem oder mehreren der vorhergehenden Ansprüche, **dadurch gekennzeichnet, dass** die Stelleinrichtung (2) mindestens eine Anzeigeeinrichtung umfasst, die insbesondere eine Betätigungsrichtung des Betätigungsabschnitts (26) der ersten Distanzmittels (16) und/oder des Betätigungsabschnitts (54) des zweiten Distanzmittels (46) anzeigt.

18. Stelleinrichtung (2) nach Anspruch 17, **dadurch gekennzeichnet, dass** jedem Ankerelement (12, 14, 48) eine Anzeigeeinrichtung zugeordnet ist, die jeweils lösbar oder unlösbar, insbesondere angeklebt, angeclipst oder formschlüssig, am Ankerelement (12, 14, 48) angeordnet ist.

19. Regulierungsvorrichtung (4) zum Richten und/oder Regulieren mindestens eines Kiefers und/oder mindestens eines Zahns, mit mindestens einer Richteinrichtung (10), die mindestens einen, insbesondere plattenförmigen, ersten Richtkörper (6) und mindestens einen, insbesondere plattenförmigen, zweiten Richtkörper (8) aufweist, welche, zumindest in einer Transversalebene (horizontale Ebene) und in einer Sagittalebene (vertikale Ebene durch Körpermitte) relativ zueinander bewegbar sind, und die sich mit mindestens einem Richtkörper (6, 8, 50) an mindestens einem Kiefer und/oder an mindestens einem Zahn abstützt, und mit einer Stelleinrichtung (2) nach einem der Ansprüche 1 bis 18.

## Claims

1. An adjusting device (2) for a regulating device (4) for straightening and/or regulating at least one jaw and/or at least one tooth, which can be or is located between a first straightening body (6) and a second straightening body (8) of a straightening device (10) and which comprises at least one first anchor element (12) which can be or is fixed to the first straightening body (6), at least one second anchor element (14) which can be or is fixed to the second straightening body (8) and comprises at least one first spacer unit (16) for adjusting a spacing between the first anchor element (12) and the second anchor element (14), which spacer unit can be or is adjustably fixed to the first anchor element (12) and/or to the second anchor element (14), wherein the adjusting device (2) includes at least one base body (18) which is located substantially centrally between the first anchor element (12) and the second anchor element (14), said base body comprising at least one first spacer guide (20) for the first spacer unit (16), **characterized in that** the base body (18) comprises a first portion (32) on which the first spacer unit (16) is located, and comprises a second portion (34) on which at least one lever means (36) in the form of a mandrel is located, and wherein the base body (18) and at least one of the at least one lever means (36) include a common component which is produced in a single piece and/or that the base body (18) and at least one of the at least one lever means (36) each include components which can be separated from one another or which are separate, and are detachably or non-detachably connected with one another on the second portion (34) of the base body (18), and wherein
the adjusting device (2) additionally includes at least one first guide unit (22) which extends from the first anchor element (12) to the second anchor element (14) and guides a movement of the anchor elements (12, 14) when the spacing from one another is adjusted by the first spacer unit (16), and that the base body (18) comprises at least one first guide for the guide unit (24) for the at least one guide unit (22), and wherein
the at least one lever means (36) comprises a first area (38), with which it is located on the second portion (34) of the base body (18), a second area (40) which includes the largest extension of the lever means (36) and at least one guiding surface (42), with which the lever means (36) can be slidingly moved on a corresponding surface of a web element, and having a third area (44) which extends diagonally or transversely with respect to the second area, and wherein the second area (40) of the lever means (36) extends transversely or diagonally with respect to the first portion (32) and/or the second portion (34) of the base body (18), and wherein
the adjusting device (2) comprises at least one third anchor element (48) which is fixed to a third straightening body (50), which is relatively movable with respect to the first straightening body (6) and the second straightening body (8), and which can be adjusted by means of a second spacer unit (46) with respect to its spacing from the base body (18), and the base body comprises at least one second spacer guide (52) for the second spacer unit (46).

2. The adjusting device (2) according to Claim 1, **characterized in that** the at least one first guide unit (22) can be or is located, at least in sections (32), in an opening, in particular a drilled hole, of the first anchor element (12) and/or of the second anchor element (14).

3. The adjusting device (2) according to Claim 1 or 2, **characterized in that** at least two first guide units (22) which extend parallel to one another are provided, and that the first spacer unit (16) is located between the two first guide units (22).

4. The adjusting device (2) according to one or more of the preceding claims, **characterized in that** the first spacer unit (16) includes a circular body, in particular a bolt or an expansion screw, which comprises an external thread at least at one of its ends, with which thread the first spacer unit (16) can be or is located, at least partially, in an opening comprising in particular an internal thread, in particular a threaded hole, of the first anchor element (12) and/or of the second anchor element (14).

5. The adjusting device (2) according to one or more of the preceding claims, **characterized in that** the first spacer unit (16) comprises at least one actuating portion (26) for actuating the first spacer unit (16) in a rotational manner and that the base body (18) comprises at least one first recess (30), by means of which the actuating portion (26) of the first spacer unit (16) is operably accessible from the outside.

6. The adjusting device (2) according to Claim 5, **characterized in that** the actuating portion (26) of the first spacer unit (16) is formed by at least one first annular element (28) on which the circular body of the first spacer unit (16) can be or is fixed in a non-rotational manner, or by a radially projecting portion of the circular body, and/or that the first annular element (28) and/or the radially projecting portion of the circular body comprise(s) a plurality of radially extended openings which are accessible from the outside via the at least one first recess (30) of the base body (18).

7. The adjusting device (2) according to one or more of the preceding claims, **characterized in that** the base body (18) comprises a first portion (32) on which the recess (30) and/or the at least one first guide unit (22) is/are located.

8. The adjusting device (2) according to one or more of the preceding claims, **characterized in that** the lever means (36) can be slidingly moved with the at least one guiding surface (42) of the second area on a corresponding surface of a web element fixed to the lower jaw.

9. The adjusting device (2) according to one or more of the preceding claims, **characterized in that** the second area (40) of the lever means (36) extends transversely or diagonally with respect to the first portion (32) and/or the second portion (34) of the base body (18) and includes therewith an angle of 180° to 0°, preferably 135° to 45°, preferably 120° to 70°, preferably 110° to 80°.

10. The adjusting device (2) according to one or more of the preceding claims, **characterized in that** the adjusting device (2) additionally includes at least one second guide unit (5) which extends from the third anchor element (48) to the base body (18) and guides a movement of the third anchor element (48) when the spacing from the base body (18) is adjusted by the second spacer unit (46), and that the base body (18) comprises at least one second guide for the guide unit (52) for the at least one second guide unit (5).

11. The adjusting device (2) according to one or more of the preceding claims, **characterized in that** the at least one second guide unit (5) is located, at least in sections, in an opening, in particular a drilled hole, of the third anchor element (48) and/or of the base body (18).

12. The adjusting device (2) according to one or more of the preceding Claims 10 or 11, **characterized in that** at least two second guide units (5) which extend in particular parallel to one another are provided, and that the second spacer unit (46) is located between the two second guide units (5).

13. The adjusting device (2) according to one or more of the preceding Claims 10 to 12, **characterized in that** the second spacer unit (46) includes a circular body, in particular a bolt or an expansion screw, which comprises an external thread at least at one of its ends, with which thread it is located in the opening comprising in particular an internal thread, in particular a threaded hole, of the third anchor element (48) and/or of the base body (18).

14. The adjusting device (2) according to one or more of the preceding Claims 10 to 13, **characterized in that** the second spacer unit (46) comprises an actuating portion (54), in particular for actuating the second spacer unit (46) in a rotational manner, and that the base body (18) comprises a second recess (56), by means of which the actuating portion (54) of the second spacer unit (46) is operably accessible from the outside.

15. The adjusting device (2) according to one or more of the preceding Claims 10 to 14, **characterized in that** the actuating portion (54) of the second spacer unit (46) can be or is fixed by at least one second annular element (58) to the circular body of the second spacer unit (46) in a non-rotational manner, or is formed by a radially projecting portion of the circular body, and/or that the second annular element (58) and/or the radially projecting portion of the circular body comprise(s) a plurality of radially extended openings (60), in particular drilled holes, which are operably accessible from the outside via the at least one second recess (56) of the base body (18).

16. The adjusting device (2) according to one or more of the preceding Claims 10 to 15, **characterized in that** the first spacer unit (16) and the second spacer unit (46) are located transversely or diagonally to one another.

17. The adjusting device (2) according to one or more of the preceding claims, **characterized in that** the adjusting device (2) includes at least one display device, which displays in particular an actuation direction of the actuating portion (26) of the first spacer unit (16) and/or of the actuating portion (54) of the second spacer unit (46).

18. The adjusting device (2) according to Claim 17, **characterized in that** a display device is assigned to each anchor element (12, 14, 48), each of which is detachably or non-detachably located, in particular glued on, clipped on or positively located on the anchor element (12, 14, 48).

19. A regulating device (4) for straightening and/or regulating at least one jaw and/or at least one tooth having at least one straightening device (10), which comprises at least one, in particular plate-shaped, first straightening body (6) and at least one, in particular plate-shaped, second straightening body (8), which can be moved relative to one another at least in a transversal plane (horizontal plane) and in a sagittal plane (vertical plane through the middle of the body), and which are supported with at least one straightening body (6, 8, 50) on at least one jaw and/or on at least one tooth, and having an adjusting device (2), according to any one of Claims 1 to 18.

## Revendications

1. Système de réglage (2) pour un dispositif d'ajustement (4) pour le redressement et/ou l'ajustement d'au moins une mâchoire et/ou d'au moins une dent, lequel est disposable ou disposé entre un premier corps de redressement (6) et un deuxième corps de redressement (8) d'un dispositif de redressement (10) et lequel présente au moins un premier élément d'ancrage (12), qui est fixable ou fixé sur le premier corps de redressement (6), au moins un deuxième élément d'ancrage (14), qui est fixable ou fixé sur le deuxième corps de redressement (8), et au moins un premier moyen d'espacement (16) réglable, fixable ou fixé sur le premier élément d'ancrage (12) et/ou sur le deuxième élément d'ancrage (14) pour le réglage d'une distance entre le premier élément d'ancrage (12) et le deuxième élément d'ancrage (14), le système de réglage (2) comprenant au moins un corps principal (18) disposé essentiellement au milieu entre le premier élément d'ancrage (12) et le deuxième élément d'ancrage (14), lequel présente au moins un premier guide de moyen d'espacement (20) pour le premier moyen d'espacement (16), **caractérisé en ce que** le corps principal (18) présente un premier segment (32) sur lequel le premier moyen d'espacement (16) est disposé et un deuxième segment (34) sur lequel au moins un moyen de levier (36) en forme de broche, et le corps principal (18) et au moins un des au moins un moyen de levier (36) comprenant un composant fabriqué d'une pièce commun, et/ou le corps principal (18) et au moins un des au moins un moyen de levier (36) comprenant des composants respectivement séparables ou séparés et étant reliés ensemble de façon amovible ou non amovible sur le deuxième segment (34) du corps principal (18), et
le système de réglage (2) comprenant de plus au moins un premier moyen de guidage (22), lequel s'étend du premier élément d'ancrage (12) au deuxième élément d'ancrage (14) et guidant un mouvement des éléments d'ancrage (12, 14) lors du réglage de la distance entre eux par le premier moyen d'espacement (16) et **en ce que** le corps principal (18) présente au moins un premier guide de moyen de guidage (24) pour l'au moins un moyen de guidage (22), et
l'au moins un moyen de levier (36) présentant une première zone (38), avec laquelle il est disposé sur le deuxième segment (34) du corps principal (18), une deuxième zone (40), laquelle comprend la plus grande étendue du moyen de levier (36) et au moins une surface de guidage (42), avec laquelle le moyen de levier (36) est déplaçable de façon coulissante le long d'une surface correspondante d'un élément d'arrête, et avec une troisième zone (44), laquelle s'étend en diagonale ou en travers par rapport à la deuxième zone, et la deuxième zone (40) du moyen de levier (36) s'étendant en travers ou en diagonale par rapport au premier segment (32) et/ou au deuxième segment (34) du corps principal (18), et
le système de réglage (2) présentant au moins un troisième élément ancrage (48), lequel est fixé sur un troisième corps de redressement (50), lequel est relativement déplaçable par rapport au premier corps de redressement (6) et au deuxième corps de redressement (8), et est réglable au moins d'un deuxième moyen d'espacement (46) relativement à sa distance au corps principal (18) et le corps principal présentant au moins un deuxième guide de moyen d'espacement (52) pour le deuxième moyen d'espacement (46).

2. Système de réglage (2) selon la revendication 1, **caractérisé en ce que** l'au moins un premier moyen de guidage (22) est disposable ou disposé au moins par segment (32) dans une ouverture, notamment un alésage, du premier élément d'ancrage (12) et/ou du deuxième élément d'ancrage (14).

3. Système de réglage (2) selon la revendication 1 ou 2, **caractérisé en ce qu'**au moins deux premiers moyens de guidage (22) s'étendant parallèlement l'un à l'autre sont prévus, et **en ce que**, entre les deux premier moyens de guidage (22), le premier moyen d'espacement (16) est disposé.

4. Système de guidage (2) selon une ou plusieurs des revendications précédentes, **caractérisé en ce que** le premier moyen d'espacement (16) comprend un corps rond, notamment un boulon ou une vis à extension, lequel présente au moins à l'une de ses extrémités un filet extérieur, avec lequel le premier moyen d'espacement (16) est disposable ou disposé au moins partiellement dans une ouverture, notamment un alésage fileté, présentant notamment un filet intérieur, du premier élément d'ancrage (12) et/ou du deuxième élément d'ancrage (14).

5. Système de réglage (2) selon une ou plusieurs des revendications précédentes, **caractérisé en ce que** le premier moyen d'espacement (16) présente au moins un segment d'actionnement (26) pour l'actionnement pivotant du premier moyen d'espacement (16), et **en ce que** le corps principal (18) présente au moins un premier évidement (30), par lequel le segment d'actionnement (26) du premier moyen d'espacement (16) est accessible de l'extérieur de façon actionnable.

6. Système de guidage (2) selon la revendication 5, **caractérisé en ce que** le segment d'actionnement (26) du premier moyen d'espacement (16) est formé par au moins un premier élément en anneau (28), sur lequel le corps rond du premier moyen d'espacement (16) est fixable ou fixé de façon solidaire en rotation ou par un segment du corps rond faisant saillie radialement et/ou **en ce que** le premier élément en anneau (28) et/ou le segment du corps rond faisant saillie radialement présentent une multiplicité d'ouvertures s'étendant radialement, lesquelles sont accessibles de l'extérieur par l'au moins un premier évidement (30) du corps principal (18).

7. Système de réglage (2) selon une ou plusieurs des revendications précédentes, **caractérisé en ce que** le corps principal (18) présente un premier segment (32) sur lequel l'évidement (30) et/ou l'au moins un premier moyen de guidage (22) sont disposés.

8. Système de réglage (2) selon une ou plusieurs des revendications précédentes, **caractérisé en ce que** le moyen de levier (36) est déplaçable de façon coulissante avec l'au moins une surface de guidage (42) de la deuxième zone le long d'une surface correspondante d'un élément d'arrête fixé sur la mandibule.

9. Système de guidage (2) selon une ou plusieurs des revendications précédentes, **caractérisé en ce que** la deuxième zone (40) du moyen de levier (36) s'étend en travers ou en diagonale par rapport au premier segment (32) et/ou au deuxième segment (34) du corps principal (18), formant avec celui-ci un angle de 180° à 0°, de préférence de 135° à 45°, de préférence de 120° à 70°.

10. Système de réglage (2) selon une ou plusieurs des revendications précédentes, **caractérisé en ce que** le système de réglage (2) comprend de plus au moins un deuxième moyen de guidage (5), lequel s'étend du troisième élément d'ancrage (48) vers le corps principal (18) et guide un mouvement du troisième élément d'ancrage (48) lors du réglage de la distance au corps principal (18) par le deuxième moyen d'espacement (46), et **en ce que** le corps principal (18) présente au moins un deuxième guide de moyen de guidage (52) pour l'au moins un deuxième moyen de guidage (5).

11. Système de réglage (2) selon une ou plusieurs des revendications précédentes, **caractérisé en ce que** l'au moins deuxième moyen de guidage (5) est disposé au moins par segment dans une ouverture, notamment un alésage, du troisième élément d'ancrage (48) et/ou du corps principal (18).

12. Système de réglage (2) selon une ou plusieurs des revendications 10 ou 11, **caractérisé en ce qu'**au moins deux deuxièmes moyens de guidage (5), s'étendant notamment parallèlement l'un à l'autre, sont prévus, et **en ce que**, entre les deux deuxièmes moyens de guidage (5), le deuxième moyen d'espacement (46) est disposé.

13. Système de guidage (2) selon une ou plusieurs des revendications précédentes 10 à 12, **caractérisé en ce que** le deuxième moyen d'espacement (46) comprend un corps rond, notamment un boulon ou une vis à extension, lequel présente au moins à l'une de ses extrémités au moins un filet extérieur, avec lequel il est disposé dans une ouverture, notamment un alésage fileté, présentant notamment un filet intérieur, du troisième élément d'ancrage (48) et/ou du premier corps principal (18).

14. Système de réglage (2) selon une ou plusieurs des revendications précédentes 10 à 13, **caractérisé en ce que** le deuxième moyen d'espacement (46) présente un segment d'actionnement (54), notamment pour l'actionnement pivotant du deuxième moyen d'espacement (46), et **en ce que** le corps principal (18) présente un deuxième évidement (56), au moyen duquel le segment d'actionnement (54) du deuxième moyen d'espacement (46) est accessible de l'extérieur de façon actionnable.

15. Système de réglage (2) selon une ou plusieurs des revendications précédentes 10 à 14, **caractérisé en ce que** le segment d'actionnement (54) du deuxième segment d'espacement (46) est formé par au moins un deuxième élément en anneau (58), sur lequel le corps rond du deuxième moyen d'espacement (46) est fixable ou fixé de façon solidaire en rotation ou par un segment du corps rond faisant saillie radialement, et/ou **en ce que** le deuxième élément en anneau (58) et/ou le segment du corps rond faisant saillie radialement présentent une multiplicité d'ouvertures (60), notamment des alésages, s'étendant radialement, qui sont accessibles de l'extérieur de façon actionnable par l'au moins un deuxième évidement (56) du corps principal (18).

16. Système de réglage (2) selon une ou plusieurs des revendications 10 à 15, **caractérisé en ce que** le premier moyen d'espacement (16) et le deuxième moyen d'espacement (46) sont disposés en diagonale ou en travers l'un par rapport à l'autre.

17. Système de réglage (2) selon une ou plusieurs des revendications précédentes, **caractérisé en ce que** le système de réglage (2) comprend au moins un dispositif d'indication, lequel indique notamment une direction d'actionnement du segment d'actionnement (26) du premier moyen d'espacement (16) et/ou du segment d'actionnement (54) du deuxième moyen d'espacement (46).

18. Système de guidage (2) selon la revendication 17, **caractérisé en ce qu'**un dispositif d'indication est attribué à chaque élément d'ancrage (12, 14, 48), lequel dispositif est disposé sur l'élément d'ancrage (12, 14, 48) de façon respectivement amovible ou non amovible, notamment par collage, par clipsage ou par liaison de forme.

19. Dispositif d'ajustement (4) pour le redressement et/ou l'ajustement d'au moins une mâchoire et/ou d'au moins une dent, avec au moins un dispositif de redressement (10), lequel présente au moins un premier corps de redressement (6), notamment en forme de plaque, et au moins un deuxième corps de redressement (8), notamment en forme de plaque, lesquels sont déplaçables l'un par rapport à l'autre, au moins dans un plan transversal (plan horizontal) et dans un plan sagittal (plan vertical par le milieu du corps), et lequel s'appuie sur au moins une mâchoire et/ou au moins une dent avec au moins un corps de redressement (6, 8, 50), et avec un système de réglage (2) selon l'une des revendications 1 à 18.
